# EUROPEAN PATENT APPLICATION

(11) **EP 3 376 064 A1**
(43) Date of publication of application: **19.09.2018**
(21) Application number: 17160769.0
(22) Date of filing: 14.03.2017
(51) Int. Cl.: F16F 13/00, F23K 5/00, F16F 9/02

(54) **SCHOCK ABSORBER SAFETY SYSTEM FOR GAS COCKS WITH THERMOSTAT**

(71) Applicant: Turas Gaz Armatürleri Sanayi. Ve Ticaret A.S., 34590 Istanbul (TR)
(72) Inventor: Turhan, Gökhan, Istanbul (TR); Demirezen, Mehmet, Istanbul (TR); Gün, Isa, Istanbul (TR); Sen, Musa, Istanbul (TR)

(57) **Abstract**

The invention is related to shock absorber system designed to be used for absorbing shocks and pressures that can happen to safety valve in thermostatic gas valve which have safety valve device and are used in household baking ovens when the shaft of the valve is completely pushed. Shock absorber system that is subject of the invention consists of; pushing pin that transmits movement from shaft of the valve to safety valve, pin bedding union where pushing pin is placed, spring that protects the system by absorbing extra loads from outside from the point where safety valve is completely pushed, O-ring and washer which ensures leak tightness and circlips used to prevent pushing pin to move out.

## Description

### TECHNICAL FIELD

The invention is related to shock absorber system designed to be used for absorbing shocks and pressures that can happen to safety valve in gas valves with thermostat which have safety valve device and are used in household cooking ovens when the shaft of the valve is completely pushed. Shock absorber system that is subject of the invention consists of; pushing pin that transmits movement from shaft of the valve to safety valve, pin bedding union where pushing pin is placed, spring that protects the system by absorbing extra loads from outside from the point where safety valve is completely pushed, o-ring and washer which ensures leak tightness and circlips used to prevent pushing pin to move out.

Pushing pin applies pressure to safety valve completely till the end when the user starts to push shaft of the valve by turning the button in gas valves of household baking ovens in conventional use. As well as there is high possibility of deformation in safety valve in case of over pushing of pushing pin, when the safety valve is deformed, valve can become unusable while gas passing way is not opened.

The pin is pushed back no matter how deeper it is pushed and the transmission of pressure on cap and pin is prevented by means of shock absorber spring placed on the end of pushing pin that is subject of the invention. Thus, breakdown of the safety valve is prevented. Furthermore, end part of the pushing pin is designed to be stepped in order to prevent shock absorber spring to move out.

### STATE OF THE ART

In application with number EP0805310 and dated 05.11.1997 of Copreci S. Coop. it is mentioned about gas valve for household baking ovens. Electromagnet is used in gas valve in that application, wherein a union is used to release back the said electromagnet when it is pushed. However, it is difficult to produce aforementioned union as well as it is not possible to mount it on gas valves. Moreover, in the case that union or magnet move back the system causes gas leakage easily.

In another application with number ES2359975 of Copreci S. Coop. it is mentioned about a gas flow valve which is used for gas burners and consists of a safety valve which comprises a shaft that can move axially in a first direction and a regulation component that can move in a second direction. However, said valve is designed for built-in ovens, wherein mechanical problems may occur depending on pushing force of user because of the angle between shaft and safety valve and furthermore cricks that may occur in valve cannot be prevented while there isn't any absorbing component that reduces over load made by user to the system. Overload on safety valve is prevented by means of spring that exist in shock absorber system that is subject of the invention.

The invention has surpassed the state-of-the-art while it solves the problems of state-of-the-art and can be conveniently used safety gas valves which are used for household baking ovens in industry.

### AIM OF THE INVENTION

Aim of the invention is to produce thermostatic gas valve which is used in household baking ovens, and comprises a system that protects safety valve against shocks and pressures.

Aim of the invention is that the shock absorber system consists of pushing pin, pin bedding union, spring, o-ring, washer and circlips for absorbing shocks and pressures that may happen to safety valve.

Further aim of the invention is that pushing pin has a step on its end part in order to prevent spring to move out.

A further aim of the invention is to produce a pin bedding union end part of which is straight in order that the spring can be engaged.

Another aim of the invention is that the prevention of gas valve deformations arising from overload on safety valve.

Structural and characteristic specifications and all advantages of the invention will be understood more clearly by means of following figures and detailed description written by making references to these figures and therefore, assessment should be done by taking into consideration these figures and detailed description.

### BRIF DESCRIPTION OF THE FIGURES

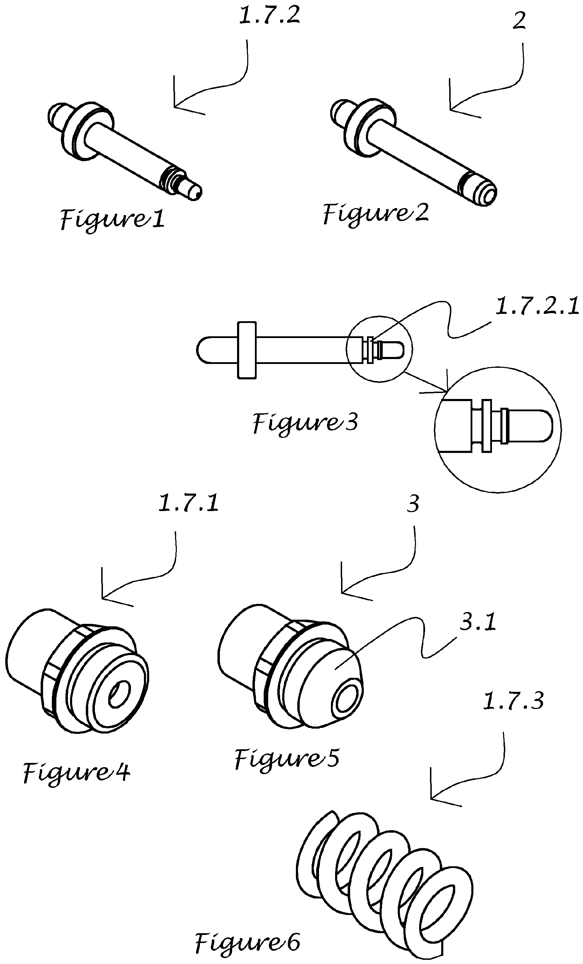

Figure 1 is perspective view of the pushing pin that is subject of the invention,
Figure 2 is perspective view of the existing pushing pin,
Figure 3 is detailed view of the pushing pin that is subject of the invention,
Figure 4 is perspective view of the pin bedding union that is subject of the invention,
Figure 5 is perspective view of the existing pin bedding union,
Figure 6 is perspective view of the spring that is subject of the invention,

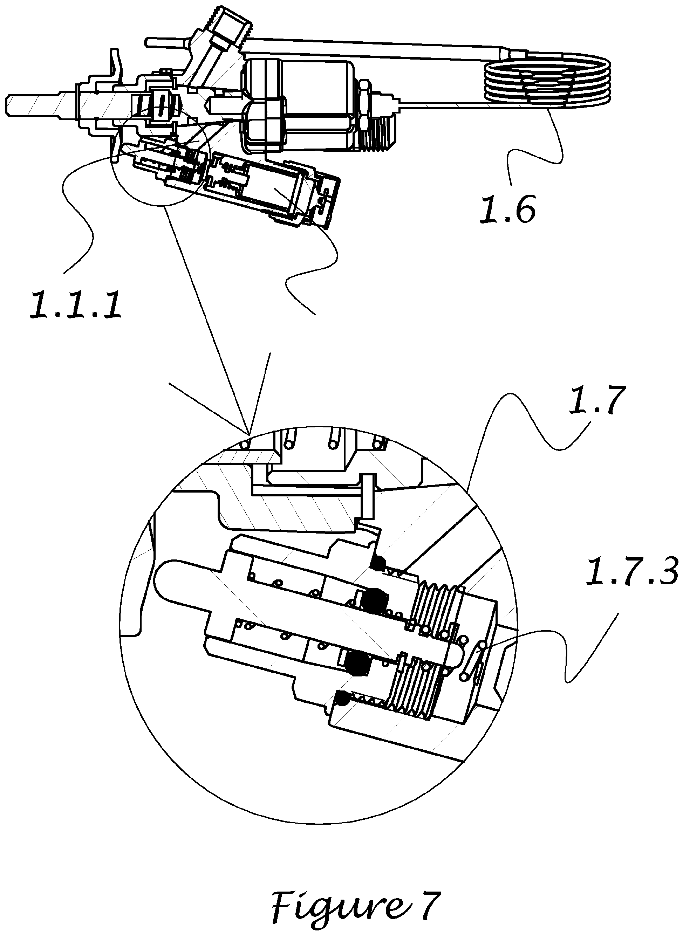

Figure 7 is cross sectional view of thermostatic gas valve that has shock absorber system that is subject of the invention,

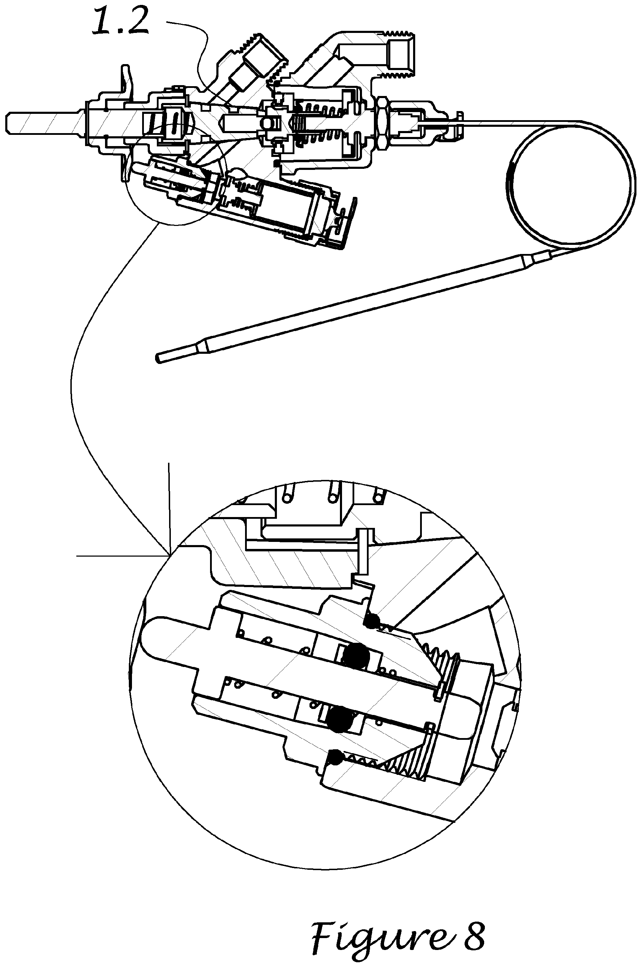

Figure 8 is cross sectional view of the existing thermostatic gas valve,

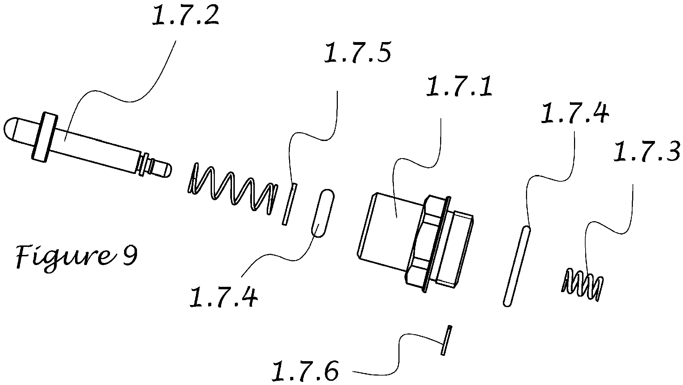

Figure 9 is exploded view of the shock absorber system that is subject of the invention,

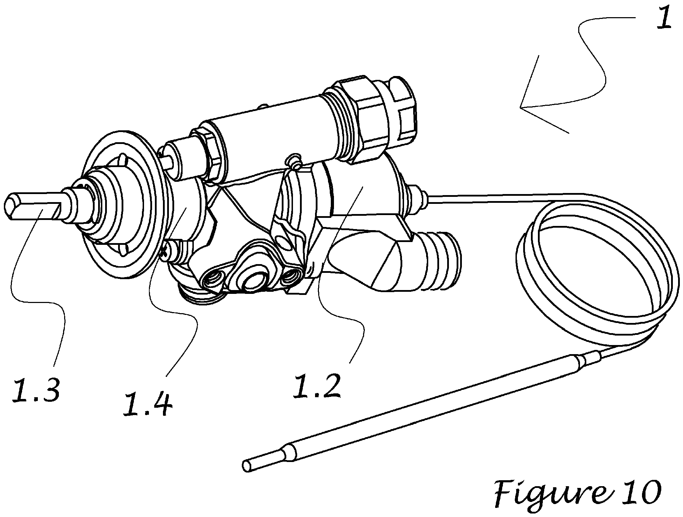

Figure 10 is perspective view of gas valve in which shock absorber system that is subject of the invention is used,

### REFERENCE NUMBERS

- 1.: Thermostatic gas valve
1.1. Body
1.1.1. Gas passing channel
1.2. Male
1.3. Shaft
1.4. Cap
1.5. Safety valve
1.6. Thermostat sensor
1.7. Shock absorber system
1.7.1. Pin bedding union
1.7.2. Pushing pin
1.7.2.1. Spring stabilizing step
1.7.3. Spring
1.7.4. O-ring
1.7.5. Washer
1.7.6. Circlips
- 2.: Existing pushing pin
- 3.: Existing pin bedding union
3.1. Taper

### DETAILED DESCRIPTION OF INVENTION

Thermostatic gas valve (1) in which shock absorber system (1.7) that is subject of the invention is involved basically consists of body (1.1), male (1.2), shaft (1.3), cap (1.4), safety valve (1.5), thermostat sensor (1.6) and shock absorber system (1.7) that is subject of the invention. Said shock absorber system (1.7) that is subject of the invention consists of; pushing pin (1.7.2) that transmits movement from shaft (1.3) of the valve to safety valve (1.5), pin bedding union (1.7.1) where pushing pin (1.7.2) is placed, spring (1.7.3) that protects the system by absorbing extra loads from outside from the point where safety valve (1.5) is completely pushed, o-ring (1.7.4) and washer (1.7.5) which ensures leak tightness and circlips (1.7.6) used to prevent pushing pin (1.7.2) to move out.

General working principal of thermostatic gas valves (1) is that the safety valve (1.5) is opened by means of moving the shaft (1.3) of the valve forward and that the gas which fills in safety valve (1.5) house is transmitted to the section where male (1.2) exists through gas passing channel (1.1.1). Gas is filled between male (1.2) and thermostat diaphragm and diaphragm is opened by adjusting the flow of gas through combustion holes which are on male (1.2) by rotating shaft (1.3). Thus, gas passing to burner is provided and combustion in oven is started. After interior temperature of oven is increased, the liquid which is in thermostat sensor (1.6) which is heat sensitive part of gas valve (1) expands and applies pressure and thermostat diaphragm is closed slowly. The oven starts to cool after diaphragm is closed and starts to get heated after diaphragm is opened while the pressure applied to thermostat membrane is decreased after the temperature of interior of the oven becomes less than the temperature configured by the user.

Safety valve (1.5) is opened by means of that the shaft (1.3) of the valve gives forward action to pushing pin (1.7.2). There is possibility for safety valve (1.5) to breakdown depending on safety valve (1.5) spring or pushing pin (1.7.2) in the case that pushing pin (1.7.2) applies too much pressure on safety valve (1.5). When safety valve (1.5) becomes out of order, gas passing will not be performed while gas passing channel will be enclosed constantly, therefore thermostatic gas valve (1) will be non-operational.

Whereas, in shock absorber system (1.7) that is subject of the invention, with the help of spring (1.7.3) which is shock absorber and mounted on end part of pushing pin (1.7.2), cap (1.4) and pushing pin (1.7.2) is prevented to apply pressure on safety valve (1.5). Thus, safety valve (1.5) doesn't take load more than its capacity and so possibility of its breaking down is avoided. Furthermore, pushing pin (1.7.2) has spring stabilizing step (1.7.2.1) in order that spring (1.7.3) fits exactly and doesn't move out.

Additionally, pin bedding union (1.7.1) which is used for assembling of pushing pin (1.7.2) to the system is also designed different from existing pin bedding union (3). The taper (3.1) of the end part is removed and shorter and straighter pin bedding union (1.7.1) is obtained. By means of designing the end part of said pin bedding union (1.7.1) as straight, a distance is given for spring (1.7.3) to be engaged to pushing pin (1.7.2).

Scope of protection of this application is stated in claims and can definitely not be limited to the things that are explained with the aim of illustration. Because, it is apparent that the one skilled in the art can propound the novelty set forth in the invention without going beyond the main theme and/or can implement this structure to other fields with similar purpose used in related art.

## Claims

1. The invention is shock absorber system (1.7) that absorbs shocks and pressures that may happen to safety valve (1.5) when the shaft (1.3) of the valve is completely pushed, **characterized in that** it consists of;
• Pushing pin (1.7.2) that transmits movement from shaft (1.3) of the valve over safety valve (1.5),
• Pin bedding union (1.7.1) end part of which is designed as straight,
• Spring (1.7.3) that protects the system by absorbing extra loads from outside from the point where safety valve (1.5) is completely pushed,
• O-ring (1.7.4) and washer (1.7.5) which ensures leak tightness,
• Circlips (1.7.6) used to prevent pushing pin (1.7.2) to move out.

2. The invention is pushing pin (1.7.2) mentioned in claim 1, **characterized in that** it has at least one spring stabilizing step (1.7.2.1) in order that spring (1.7.3) fits exactly and doesn't move out.
